# EUROPÄISCHE PATENTANMELDUNG

(11) **EP 3 721 690 A1**
(43) Veröffentlichungstag der Anmeldung: **14.10.2020**
(21) Anmeldenummer: 19169073.4
(22) Anmeldetag: 12.04.2019
(51) Int. Cl.: A01B 59/041, F15B 15/24

(54) **SEITENSTREBE ZUR STABILISIERUNG EINES UNTERLENKERS EINER ANBAUVORRICHTUNG EINER LANDMASCHINE**

(71) Anmelder: Walterscheid GmbH, 53797 Lohmar (DE)
(72) Erfinder: MATTFELD, Rainer, 51105 Köln (DE); THIEL, Manuel, 51570 Windeck-Herchen (DE); SCHRÖDER, Achim, 53840 Troisdorf (DE)
(74) Vertreter: Neumann Müller Oberwalleney & Partner Patentanwälte

(57) **Zusammenfassung**

Seitenstrebe (16, 17) zur Stabilisierung eines Unterlenkers (3, 4) einer Anbauvorrichtung (2) einer Landmaschine (1) umfassend
einen Hydraulikzylinder (22) mit einem Zylindergehäuse (23) und einem Kolben (24), der in dem Zylindergehäuse (23) entlang einer Längsachse (Z) der Seitenstrebe (16, 17) zwischen einer eingeschobenen Stellung und einer ausgeschobenen Stellung verschiebbar geführt ist,
**dadurch gekennzeichnet,**
dass der Kolben (24) relativ zum Zylindergehäuse (23) um die Längsachse (Z) zwischen einer ersten Drehstellung und einer zweiten Drehstellung drehbar ist und
dass eines von den Bauteilen Zylindergehäuse (23) und Kolben (24) einen Vorsprung (30) aufweist und das andere von den Bauteilen Zylindergehäuse (23) und Kolben (24) eine Ausnehmung (31) aufweist,
wobei in der ersten Drehstellung des Kolbens (24) der Vorsprung (30) und die Ausnehmung (31) in axialer Richtung gesehen in Überdeckung zueinander stehen und in der eingeschobenen Stellung des Kolbens (24) der Vorsprung (30) axial in der Ausnehmung (31) aufgenommen ist und
wobei in der zweiten Drehstellung des Kolbens (24) der Vorsprung (30) und die Ausnehmung (31) in axialer Richtung gesehen versetzt zueinander angeordnet sind und in der eingeschobenen Stellung des Kolbens (24) der Vorsprung (30) axial in Anlage zu einer Anschlagfläche (37) ist.

## Beschreibung

Die Erfindung betrifft eine Seitenstrebe zur Stabilisierung eines Unterlenkers einer Anbauvorrichtung einer Landmaschine, wobei die Seitenstrebe einen Hydraulikzylinder mit einem Zylindergehäuse und einem Kolben, der in dem Zylindergehäuse entlang einer Längsachse der Seitenstrebe zwischen einer eingeschobenen Stellung und einer ausgeschobenen Stellung verschiebbar geführt ist, aufweist.

Seitenstreben dienen dazu, seitlich schwenkbare Unterlenker einer Anbauvorrichtung, wie zum Beispiel einer Dreipunkt- oder Vierpunktanbauvorrichtung, eines Traktors, zumindest zeitweise gegen eine Auslenkung zu stabilisieren bzw. so auszubilden, dass beim Anheben der Unterlenker zum Anheben eines Gerätes automatisch eine Mittenzentrierung des Gerätes im Verhältnis zur Traktorlängsachse eintritt. Hierzu ist jeder Unterlenker mit einer Seitenstrebe verbunden, die sich einerseits seitlich gegen den jeweiligen Unterlenker und andererseits am Traktor abstützt. Die Hydraulikzylinder der beiden Seitenstreben können mit Druck beaufschlagt werden, um somit das an der Anbauvorrichtung befestigte Gerät in eine Mittenposition zu drücken und in dieser Position spielfrei zu stabilisieren. Diese Arretierstellung kann zum Beispiel manuell vom Fahrer aktiviert werden oder automatisch aktiviert werden, wenn die Anbauvorrichtung bzw. das Gerät über eine vorbestimmte Hubhöhe angehoben wird. In dieser Stellung ist insbesondere sichergestellt, dass bei einer Straßenfahrt das Gerät zum Beispiel bei einer Kurvenfahrt nicht seitlich verschwenkt und eine instabile Straßenlage verursacht. Werden die Hydraulikzylinder der Seitenstreben hingegen drucklos geschaltet, kann das Hydrauliköl frei fließen, sodass die Unterlenker und damit das an der Anbauvorrichtung befestigte Gerät in dieser Schwimmstellung über einen Schwenkweg frei seitlich verschwenkt werden kann. Der maximale Schwenkweg bzw. die maximale seitliche Auslenkung ist durch den Hubweg, den die Hydraulikzylinder der Seitenstreben maximal vollziehen können, bestimmt.

Die EP 1 084 601 A1 beschreibt eine Seitenstrebe für einen Unterlenker eines Traktors. Die Seitenstrebe umfasst einen einfachwirkenden Hydraulikzylinder und eine Stelleinheit mit einem Hohlzylinder und einem darin verstellbaren Stellelement. Das Stellelement weist eine Gewindebohrung auf, in der eine Gewindestange einsitzt. Der Hydraulikzylinder ist mit ersten Anschlussmitteln zur Verbindung mit einem Traktor und die Gewindestange mit zweiten Anschlussmitteln zur Verbindung mit einem Unterlenker versehen. Das Stellelement ist mittels eines Betätigungshebels in einer voll ausgefahrenen Stellung des Hydraulikzylinders drehbar, so dass die Gewindestange entsprechend ein- oder ausfährt. Zur Drehsicherung ist ein erstes Halteelement vorgesehen, mit dem der Betätigungshebel im Ruhezustand in Eingriff überführbar ist. Es ist ferner ein zweites Halteelement vorhanden, welches sicherstellt, dass, wenn der Hydraulikzylinder eine andere als die voll ausgefahrene Position einnimmt, der Betätigungshebel so gehalten ist, dass eine Drehbewegung des Stellelementes relativ zum Hohlzylinder, die eine Längenverstellung bewirkt, nicht möglich ist. Ferner ist das erste Halteelement ständig in einem Führungsschlitz des zweiten Halteelements geführt, so dass ein Kolben des Hydraulikzylinders verdrehgesichert gegenüber einem Zylindergehäuse des Hydraulikzylinders gehalten ist. Die Hydraulikzylinder an zwei Unterlenkern können derart geschaltet sein, dass Hydraulikflüssigkeit frei fließen kann, sodass die Hydraulikzylinder über ihren maximalen konstruktiv vorgegebenen Verschiebeweg eine Pendelbewegung der Unterlenker zulassen. In einer anderen hydraulischen Schaltstellung kann vorgesehen sein, dass die Hydraulikzylinder nicht verfahrbar sind, sodass die Position der Unterlenker fixiert ist.

Aufgabe der vorliegenden Erfindung ist es, eine Seitenstrebe bereitzustellen, die hydraulisch betätigbar ist, wobei der Schwimmweg der Seitenstrebe einstellbar ist.

Die Aufgabe wird durch eine Seitenstrebe zur Stabilisierung eines Unterlenkers einer Anbauvorrichtung einer Landmaschine gelöst, wobei die Seitenstrebe einen Hydraulikzylinder mit einem Zylindergehäuse und einem Kolben, der in dem Zylindergehäuse entlang einer Längsachse der Seitenstrebe zwischen einer eingeschobenen Stellung und einer ausgeschobenen Stellung verschiebbar geführt ist, aufweist. Der Kolben ist relativ zum Zylindergehäuse um die Längsachse zwischen einer ersten Drehstellung und einer zweiten Drehstellung drehbar. Eines von den Bauteilen Zylindergehäuse und Kolben weist einen Vorsprung auf und das andere von den Bauteilen Zylindergehäuse und Kolben weist eine Ausnehmung auf. In der ersten Drehstellung des Kolbens stehen der Vorsprung und die Ausnehmung in axialer Richtung gesehen in Überdeckung zueinander und in der eingeschobenen Stellung des Kolbens ist der Vorsprung axial in der Ausnehmung aufgenommen. Ferner sind in der zweiten Drehstellung des Kolbens der Vorsprung und die Ausnehmung in axialer Richtung gesehen versetzt zueinander angeordnet und in der eingeschobenen Stellung des Kolbens ist der Vorsprung axial in Anlage zu einer Anschlagfläche.

Der Kolben des Hydraulikzylinders hat eine definierte ausgeschobene Stellung und eine einstellbare eingeschobene Stellung. Das bedeutet, dass der Hydraulikzylinder auf eine feste Länge ausgeschoben werden kann und dass die Länge des Hydraulikzylinders in der eingeschobenen Stellung veränderbar ist. Hierzu ist der Kolben gegenüber dem Zylindergehäuse drehbar. Da der Vorsprung in der ersten Drehstellung des Kolbens in axialer Richtung gesehen in Überdeckung zur Ausnehmung angeordnet ist, kann der Vorsprung in der eingeschobenen Stellung des Kolbens axial in die Ausnehmung eintauchen. Hierbei weist der Hydraulikzylinder die kürzeste mögliche Länge auf.

In der zweiten Drehstellung des Kolbens sind der Vorsprung und die Ausnehmung in axialer Richtung gesehen derart versetzt zueinander angeordnet, dass der Vorsprung in der eingeschobenen Stellung des Kolbens nicht axial in die Ausnehmung eintauchen kann, sondern gegen eine Anschlagfläche anläuft. Der Kolben kann somit nicht so weit in das Zylindergehäuse eingeschoben werden, wie in der ersten Drehstellung des Kolbens, sodass der Hydraulikzylinder in dieser Stellung eine Länge aufweist, die größer ist, als die Länge des Hydraulikzylinders in der eingeschobenen Stellung. Durch Einstellen des Kolbens in die erste Drehstellung oder die zweite Drehstellung kann somit der maximale Hubweg des Hydraulikzylinders bestimmt werden. Hierdurch lässt sich der seitliche Schwenkweg der Anbauvorrichtung auf zumindest zwei unterschiedliche maximale Werte einstellen.

Der Kolben kann eine Kolbenfläche und das Zylindergehäuse einen Boden aufweisen. Hierbei ist, in der eingeschobenen Stellung des Kolbens, die Kolbenfläche in Anlage zum Boden des Zylindergehäuses sein. In der ausgeschobenen Stellung des Kolbens sind die Kolbenfläche und der Boden voneinander beabstandet sein.

In einer beispielhaften Ausgestaltung weist die Kolbenfläche einen axial vorstehenden Vorsprung und der Boden die Ausnehmung und die Anschlagfläche auf. Der Vorsprung ist, in der eingeschobenen Stellung des Kolbens, in zumindest einer Drehstellung des Kolbens mit der Anschlagfläche des Bodens in Anlage. Der Vorsprung greift, in der eingeschobenen Stellung des Kolbens, in zumindest einer weiteren Drehstellung in die Ausnehmung des Bodens ein.

Hierbei kann die Kolbenfläche den Vorsprung aufweisen, der von einer Basisfläche der Kolbenfläche in Richtung Boden des Zylindergehäuses axial vorsteht. Der Boden bildet die Ausnehmung und die Anschlagfläche, wobei der Vorsprung, in der eingeschobenen Stellung des Kolbens, in der ersten Drehstellung in die Ausnehmung des Bodens eingreift und in der zweiten Drehstellung des Kolbens mit der Anschlagfläche des Bodens in Anlage ist.

Die Ausnehmung kann durch eine Mulde in einer dem Kolben zugewandten Bodenfläche des Bodens gebildet sein. Die Mulde kann hierbei in den Boden eingeformt sein. Denkbar ist auch, dass die Mulde durch ein separates Bauteil gebildet ist, das an dem Boden anliegt und diesen teilweise abdeckt, so dass der nicht abgedeckte Bereich des Bodens die Mulde darstellt. Das separate Bauteil, zum Beispiel in Form eines Bolzens oder einer Scheibe, kann auch an einer Seitenwand des Zylindergehäuses angebracht sein und in das Zylindergehäuse vorstehen.

Der Vorsprung kann ebenfalls integraler Bestandteil des Kolbens sein oder als separates Bauteil ausgebildet sein, das an der Kolbenfläche des Kolbens anliegt und mit dem Kolben verbunden ist.

Die Kolbenfläche des Kolbens kann beispielsweise einen kreisrunden Querschnitt bzw. Außenumfang aufweisen, wobei der Vorsprung innerhalb eines Kreissegments der Kolbenfläche angeordnet ist.

Der Boden des Zylindergehäuses kann einen kreisrunden Querschnitt bzw. Außenumfang aufweisen, wobei der Querschnitt der Ausnehmung komplementär zum Querschnitt des Vorsprungs ausgebildet ist. Komplementär bedeutet in diesem Zusammenhang, dass der Vorsprung in die Ausnehmung eintauchen kann. Die Ausnehmung kann grundsätzlich im Querschnitt in einem Maße deutlich größer ausgebildet sein als der Vorsprung, welches über ein erforderliches Mindestmaß hinausgeht, welches zum kraftfreien Einführen des Vorsprungs in die Ausnehmung erforderlich ist.

In Ausgestaltung kann vorgesehen sein, dass der Vorsprung in axialer Richtung gesehen stufenförmig gestaltet ist und eine vordere erste Stufenfläche und zumindest eine gegenüber der ersten Stufenfläche rückversetzte zweite Stufenfläche aufweist. In der zweiten Drehstellung und in der eingeschobenen Stellung des Kolbens ist dann die erste Stufenfläche in Anlage zur Anschlagfläche. In einer Zwischendrehstellung des Kolbens zwischen der ersten Drehstellung und der zweiten Drehstellung und in der eingeschobenen Stellung des Kolbens ist die zweite Stufenfläche in Anlage zur Anschlagfläche.

Somit werden insgesamt zumindest drei Positionen des Kolbens gegenüber dem Zylindergehäuse in der eingeschobenen Stellung realisiert. Somit können Schwimmstellungen mit drei unterschiedlichen maximalen Schwenkwegen ermöglicht werden. In der ersten Drehstellung des Kolbens weist der Hydraulikzylinder die kürzeste Länge auf, da in dieser ersten Drehstellung des Kolbens der Vorsprung vollständig in die Ausnehmung eintaucht. In der Zwischendrehstellung des Kolbens weist der Hydraulikzylinder eine mittlere Länge auf und in der zweiten Drehstellung die längste Länge.

Es ist auch denkbar, dass die Anschlagfläche in axialer Richtung gesehen stufenförmig gestaltet ist und einen vorderen ersten Anschlagflächenabschnitt und zumindest einen gegenüber dem ersten Anschlagflächenabschnitt rückversetzten zweiten Anschlagflächenabschnitt aufweist. Hierbei ist in der zweiten Drehstellung und in der eingeschobenen Stellung des Kolbens der Vorsprung in Anlage zum ersten Anschlagflächenabschnitt. In der Zwischendrehstellung des Kolbens zwischen der ersten Drehstellung und der zweiten Drehstellung und in der eingeschobenen Stellung des Kolbens ist der Vorsprung in Anlage zum zweiten Anschlagflächenabschnitt.

Auch hierdurch werden zumindest drei Positionen des Kolbens gegenüber dem Zylindergehäuse in der eingeschobenen Stellung realisiert. In der ersten Drehstellung des Kolbens weist der Hydraulikzylinder die kürzeste Länge auf, da auch hier der Vorsprung vollständig in die Ausnehmung eintaucht. In der Zwischendrehstellung des Kolbens weist der Hydraulikzylinder eine mittlere Länge auf und in der zweiten Drehstellung die längste Länge.

In einem Ausführungsbeispiel kann die Seitenstrebe ferner einen Drehsicherungsmechanismus aufweisen, der in einer Sperrstellung den Kolben drehfest zum Zylindergehäuse hält und in einer Freigabestellung den Kolben relativ zum Zylindergehäuse drehbar freigibt. Hierdurch ist sichergestellt, dass in der Sperrstellung kein unbeabsichtigtes Drehen des Kolbens erfolgen kann.

Der Drehsicherungsmechanismus kann einen Hebel aufweisen, der parallel zur Längsachse ausgerichtet ist und an einem von den Bauteilen Zylindergehäuse und Kolben um eine Schwenkachse quer zur Längsachse zwischen einer Sperrstellung und einer Freigabestellung schwenkbar befestigt ist. Der Hebel kann in eine Nut eingreifen, die an einem von den Bauteilen Zylindergehäuse und Kolben angeordnet ist, wobei der Hebel in der Sperrstellung in die Nut eingreift und in der Freigabestellung aus der Nut herausgeschwenkt ist.

Eine beispielhafte Ausführungsform wird im Folgenden anhand der Figuren näher erläutert. Hierin zeigen:
- Figur 1: einen Traktor mit einer Dreipunktanbauvorrichtung,
- Figur 2: eine schematische Draufsicht der Unterlenker der Dreipunktanbauvorrichtung gemäß Figur 1 mit Seitenstreben zur Stabilisierung der Unterlenker,
- Figur 3: eine perspektivische Ansicht einer Seitenstrebe gemäß Figur 2, wobei sich der Kolben in der ersten Drehstellung befindet,
- Figur 4: einen Teillängsschnitt durch die Seitenstrebe gemäß Figur 3 in einer eingeschobenen Stellung des Kolbens,
- Figur 5: einen Teillängsschnitt durch die Seitenstrebe gemäß Figur 4 in einer ausgeschobenen Stellung des Kolbens,
- Figur 6: eine perspektivische Ansicht einer Seitenstrebe gemäß Figur 2, wobei sich der Kolben in der zweiten Drehstellung befindet,
- Figur 7: einen Teillängsschnitt durch die Seitenstrebe gemäß Figur 6 in einer eingeschobenen Stellung des Kolbens,
- Figur 8: einen Teillängsschnitt durch die Seitenstrebe gemäß Figur 7 in einer ausgeschobenen Stellung des Kolbens.

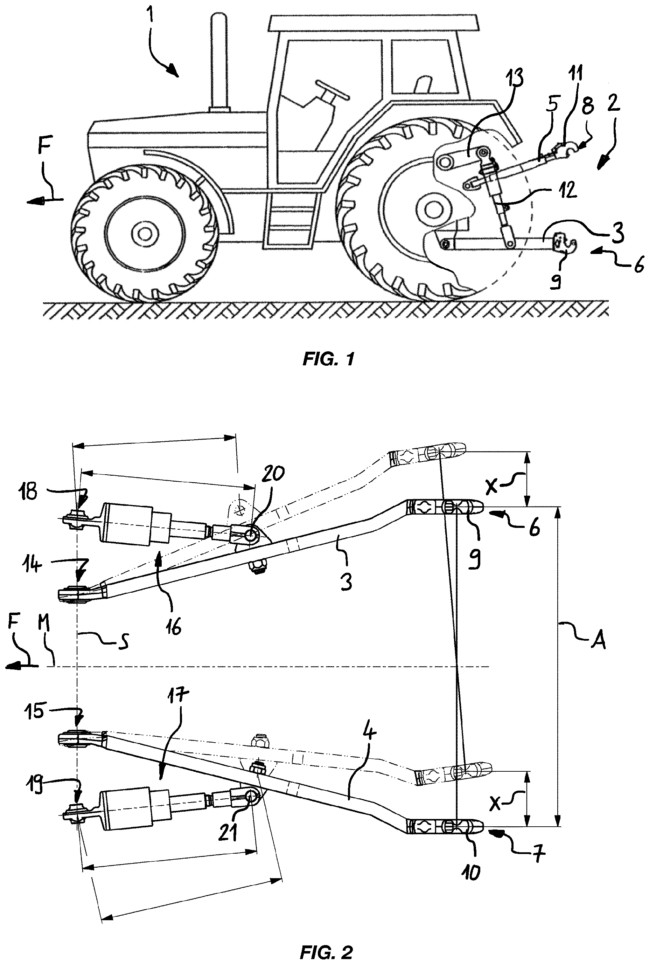

Aus der Figur 1 ist ein Landmaschine, hier einen Traktor 1 mit einer an seinem Heck angeordneten Anbauvorrichtung in Form einer Dreipunktanbauvorrichtung 2 mit zwei Unterlenkern, von denen ein Unterlenker 3 in Figur 1 sichtbar ist, und einem Oberlenker 5 ersichtlich. Der Unterlenker 3 ist an einem Ende schwenkbar am Traktor 1 befestigt. Zusätzlich zu dem sichtbaren Unterlenker 3 ist ein weiterer Unterlenker 4 (Figur 2) angebracht. Oberhalb und zwischen diesen beiden Unterlenkern 3, 4 ist der Oberlenker 5 mit einem Ende am Heck des Traktors 1 schwenkbar angelenkt. Die Unterlenker 3, 4 und der Oberlenker 5 dienen zur Anbringung eines nicht dargestellten Gerätes an den Traktor 1. Hierzu sind an freien Enden 6, 7 der Unterlenker 3, 4 und an einem freien Ende 8 des Oberlenkers 5 Kupplungshaken 9, 10, 11 befestigt, die dazu dienen, Kupplungselemente des Geräts aufzunehmen.

Zum vertikalen Anheben und Absenken des anzuhängenden Gerätes ist der Unterlenker 3 mittels einer Hubstange 12 an einen Hubarm 13 angelenkt. Der Hubarm 13 ist mit einem Kraftantrieb (nicht dargestellt) verbunden, über den der Hubarm 13 heb- und senkbar ist. Über die Hubstange 12 wird damit auch der Unterlenker 3 gehoben oder gesenkt. Der in Figur 1 nicht sichtbare Unterlenker 4 ist in identischer Weise mit einer weiteren Hubstange und einem weiteren Hubarm verbunden.

Figur 2 zeigt eine Draufsicht auf die beiden Unterlenker 3, 4, welche um eine Schwenkachse S an Befestigungsstellen 14, 15 am Heck des Traktors 1 schwenkbar angeordnet sind. Die beiden Befestigungsstellen 14, 15 sind mit gleichem Abstand seitlich zu einer Traktorlängsachse M versetzt angeordnet. Die beiden Unterlenker 3, 4 können sowohl Seitenbewegungen als auch Hubbewegungen ausführen. Die Unterlenker 3, 4 sind mit durchgezogenen Linien in einer zentrierten Mittenstellung dargestellt, in der die Unterlenker 3, 4 spiegelsymmetrisch zur Traktorlängsachse M angeordnet sind, sodass die Kupplungshaken 9, 10 der Unterlenker 3, 4 im gleichen Abstand zur Traktorlängsachse M angeordnet.

Die Unterlenker 3, 4 können aus der zentrierten Mittenstellung in seitlicher Richtung jeweils um eine Achse, die senkrecht zur Schwenkachse S und zur Traktorlängsachse M angeordnet ist, verschwenkt werden. In Figur 2 sind die Unterlenker 3, 4 in einer beispielhaften verschwenkten Seitenstellung in gestrichelten Linien dargestellt. Hierbei sind die Kupplungshaken 9, 10 der Unterlenker 3, 4 bezogen auf die Mittenstellung seitlich um das Maß X versetzt.

Zur Stabilisierung, d.h. zur Verhinderung von seitlichen Bewegungen der beiden Unterlenker 3, 4, sind mit diesen jeweils Seitenstreben 16, 17 verbunden. Die beiden Seitenstreben 16, 17 sind jeweils mit einem Ende mittels erster Anschlussmittel 18, 19 seitlich versetzt zu den Befestigungsstellen 14, 15 der Unterlenker 3, 4 an entsprechenden, zur Schwenkachse S zentrierten Befestigungsmitteln am Heck des Traktors 1 festgelegt. Mittels an den anderen Ende der Seitenstreben 16, 17 vorgesehenen zweiten Anschlussmittel 20, 21 sind die Seitenstreben 16, 17 jeweils mit einem der Unterlenker 3, 4 verbunden.

Tritt bei angehängtem Gerät eine Seitenbewegung an den Unterlenkern 3, 4 auf, findet eine Verlagerung der beiden Unterlenker 3, 4 zum Beispiel von der in durchgezogenen Linien dargestellten Mittenstellung zu der in gestrichelten Linien dargestellten Seitenstellung statt. Dabei verändern sich die Längen L1, L2 der beiden Unterlenker 3, 4, wobei die Längen L1, L2 den Abständen zwischen den ersten Anschlussmitteln 18, 19 und den zweiten Anschlussmitteln 20, 21 entsprechen. Die Länge L1 des in Fahrtrichtung F betrachtet rechten Unterlenkers 3 verkürzt sich von dem Maß L1 auf L1'. Die Länge L2 des in Fahrtrichtung F betrachtet linken Unterlenkers 4 verlängert sich vom Maß L2 auf L2'. Dabei sind die Längenänderungen der beiden Unterlenker 3, 4 unterschiedlich.

Bei einer Verschwenkung der Unterlenker 3, 4 um die Befestigungsstellen 14, 15 im entgegengesetzten Sinne als in Figur 2 dargestellt, würde entsprechend die Länge L1 verlängert und die Länge L2 verkürzt.

Durch eine konstruktive Festlegung der Seitenstreben 16, 17 hinsichtlich der maximalen Verkürzung wird durch die Seitenstreben 16, 17 gewährleistet, dass die Unterlenker 3, 4 in einer maximalen Seitenstellung (zum Beispiel gemäß der gestrichelt dargestellten Stellung in Figur 2) nicht gegen Hinterräder des Traktors 1 anschlagen. Ferner dienen die beiden Seitenstreben 16, 17 dazu, ein angehängtes Gerät auf der Traktorlängsachse M zentriert halten zu können, wenn sich die Dreipunktanbauvorrichtung 2 beispielsweise in einem angehobenen Transportzustand befindet. Gleiches gilt auch dann, wenn kein Gerät angehängt ist und die Unterlenker 3, 4 sich in einer Transportposition befinden. Die beiden Seitenstreben 16, 17 sorgen in diesem Zustand dafür, dass die Unterlenker 3, 4 so gehalten werden, dass sie sich seitlich nicht in dem eingestellten Spreizmaß A von der Traktorlängsachse M nach außen bewegen können. Das Spreizmaß A zwischen den Kupplungshaken 9, 10 der beiden Unterlenker 3, 4 kann durch in die Seitenstreben 16, 17 integrierte Teleskopverstellungen, die von Hand einstellbar sind, eingestellt werden, wenn Geräte mit einer von der jeweils eingestellten Kategorie abweichenden Kategorie gekuppelt werden sollen.

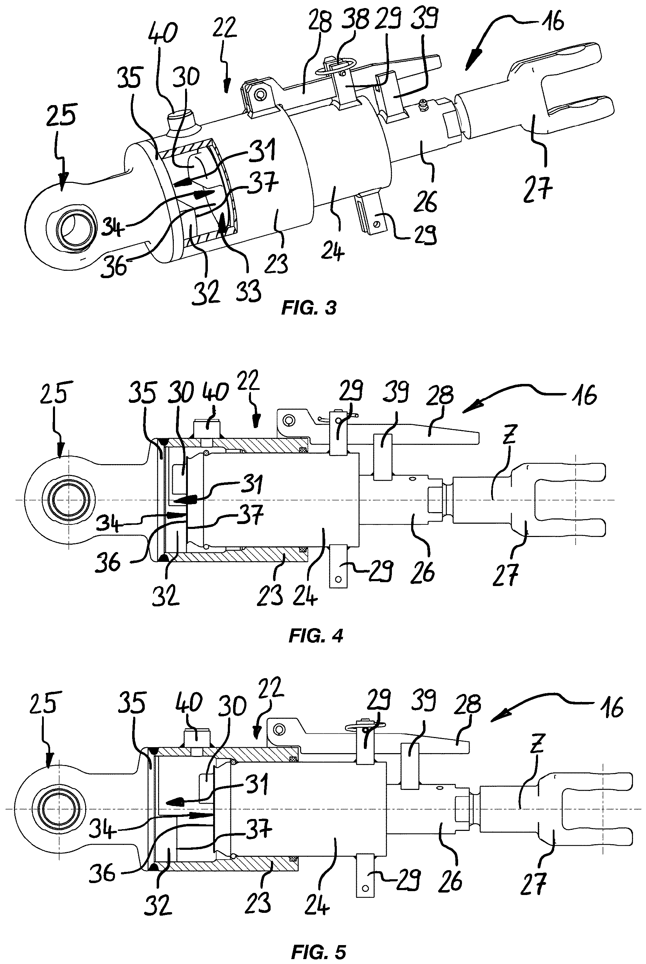

Figur 3 zeigt eine perspektivische Ansicht der Seitenstrebe 16 am rechten Unterlenker 3 gemäß Figur 2, wobei die Seitenstrebe 17 am linken Unterlenker 4 identisch aufgebaut sein kann. Die Figuren 4 und 5 zeigen die Seitenstrebe 3 in einem Teillängsschnitt in unterschiedlichen Stellungen, wobei die Figuren 3 bis 5 im Folgenden zusammen beschrieben werden.

Die Seitenstrebe 17 weist einen Hydraulikzylinder 22 mit einem Zylindergehäuse 23 und einem Kolben 24 auf. Der Kolben 24 ist in dem Zylindergehäuse 22 entlang einer Längsachse Z der Seitenstrebe 17 zwischen einer in Figur 4 dargestellten eingeschobenen Stellung und einer in Figur 5 dargestellten ausgeschobenen Stellung verschiebbar geführt. Zur Verdeutlichung des Zusammenwirkens zwischen dem Zylindergehäuse 23 und dem Kolben 24 ist das Zylindergehäuse 23 in Figur 3 teilweise ausgeschnitten dargestellt, sodass der Kolben 24 innerhalb des Zylindergehäuses 23 erkennbar ist.

Zur Befestigung der Seitenstrebe 3 am Heck des Traktors weist das Zylindergehäuse 23 an einem vom Kolben 24 abgewandten Ende eine Gelenksverbindung 25 auf, die als Kugelgelenkverbindung ausgebildet ist und Schwenkbewegungen um eine horizontale Achse und eine vertikale Achse zulässt.

Auf einer vom Zylindergehäuse 23 abgewandten Seite des Kolbens 24 ist eine Schubstange 26 mit dem Kolben 24 verbunden. An dem freien Ende weist die Schubstange 26 eine Gabel 27 auf, über die die Seitenstrebe 3 mit dem jeweiligen Unterlenker verbindbar ist. Die Schubstange 26 kann über ein hier nicht dargestelltes Gewinde mit dem Kolben 24 verbunden sein, sodass durch Drehen der Schubstange 26 gegenüber dem Kolben 24 die Schubstange 26 und damit die Gabel 27 unterschiedlich weit in den Kolben 24 eingeschraubt werden kann und die Anbauvorrichtung auf unterschiedliche Spreizmaße bzw. Kategorien eingestellt werden kann.

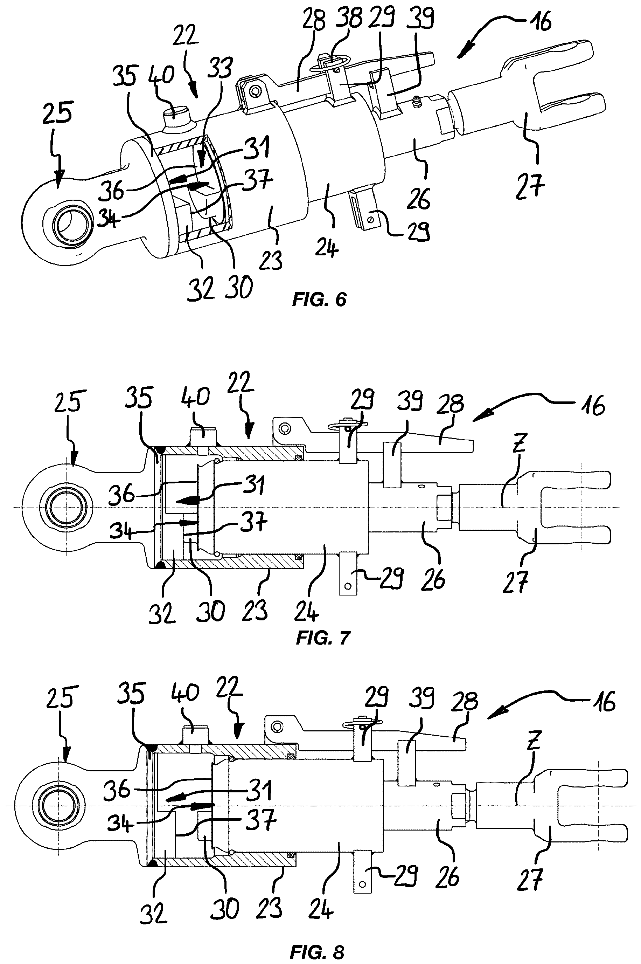

Der Kolben 24 ist relativ zum Zylindergehäuse 23 um die Längsachse Z zwischen einer ersten Drehstellung gemäß den Figuren 3 bis 5 und einer zweiten Drehstellung gemäß den Figuren 6 bis 8 drehbar. Um während des Betriebs ein unbeabsichtigtes Drehen des Kolbens 24 gegenüber dem Zylindergehäuse 23 zu verhindern, ist ein Hebel 28 mit dem Zylindergehäuse 23 schwenkbar verbunden. In einer in den Figuren 3 bis 5 gezeigten Sperrstellung erstreckt sich der Hebel 28 parallel zur Längsachse Z und steht in Richtung zur Gabel 27 vom Zylindergehäuse 23 vor. In der Sperrstellung greift der Hebel 28 in eine Nut 38 einer von zwei diametral zur Längsachse Z zueinander angeordneten Führungsgabeln 29 am Kolben 24 ein, sodass der Kolben 24 gegenüber dem Zylindergehäuse 23 drehgesichert ist und in axialer Richtung entlang der Längsachse Z zum Zylindergehäuse 23 verschiebbar geführt ist. In einer Freigabestellung des Hebels 28 ist dieser aus den Gabel 27 herausgeschwenkt, sodass der Kolben 24 relativ zum Zylindergehäuse 23 gedreht werden kann. Der Hebel 28 und die Führungsgabeln 29 bilden somit Bauteile eines Drehsicherungsmechanismus.

Darüber hinaus greift der Hebel 28 in seine Sperrstellung Sperrgabel 39 ein, die an der Schubstange 26 befestigt ist. Hierdurch wird in der Sperrstellung des Hebels 28 ein Verdrehen der Schubstange 26 gegenüber dem Kolben 24 vermieden und nur in der Freigabestellung des Hebels 28 freigegeben.

Der Kolben 24 weist eine Kolbenfläche 34 auf, die einem Boden 35 des Zylindergehäuses zugewandt ist, Die Kolbenfläche 34 und der Boden 35 sind entsprechend der Stellung des Kolbens 24 relativ zum Zylindergehäuse 23 in unterschiedlichen Abständen zueinander angeordnet.

Die Kolbenfläche 34 des Kolbens 24 weist einen Vorsprung 30 auf, der von einer Basisfläche 36 der Kolbenfläche 34 vorsteht und der in der ersten Drehstellung des Kolbens 24, in axialer Richtung der Längsachse Z gesehen, in Überdeckung zu einer Ausnehmung 31 im Boden 35 des Zylindergehäuses 23 angeordnet ist. Ebenso kann eine Stufe 32 des Zylindergehäuses 23, welche die Ausnehmung 31 begrenzt, als Vorsprung angesehen werden und ein Rücksprung 33 des Kolbens 24, der benachbart zum Vorsprung 30 angeordnet ist, als Ausnehmung angesehen werden.

In der in den Figuren 3 bis 5 dargestellten ersten Drehstellung des Kolbens 24 taucht der Vorsprung 30 in der eingeschobenen Stellung des Kolbens 24 in die Ausnehmung 31 ein, wie dies in Figur 4 ersichtlich ist. Hierbei stößt die Kolbenfläche 34 gegen die Stufe 32 des Bodens 35 und begrenzt den Verschiebeweg des Kolbens 24 in Richtung einer Verkürzung der Seitenstrebe 3. Ebenso wäre es denkbar, dass alternativ der Vorsprung 30 in Anlage zum Boden 35 gelangt.

In der ausgeschobenen Stellung des Kolbens 24 gemäß den Figuren 3 und 5 sind die Kolbenfläche 34 und der Boden 35 nicht in Anlage zueinander, sondern voneinander beabstandet.

In der zweiten Drehstellung des Kolbens 24 gemäß den Figuren 6 bis 8 sind der Vorsprung 30 und die Ausnehmung 31, in axialer Richtung der Längsachse Z gesehen, versetzt zueinander angeordnet. Somit kann der Vorsprung 30 in der eingeschobenen Stellung gemäß Figur 7 nicht in die Ausnehmung 31 eintauchen. Vielmehr stößt der Vorsprung 30 gegen eine Anschlagfläche 37 der Stufe 32 des Bodens 35 an. Somit lässt sich in der zweiten Drehstellung des Kolbens 24 die Seitenstrebe 3 nicht auf dieselbe Länge verkürzen, wie in der ersten Drehstellung. Die Seitenstrebe ist in der zweiten Drehstellung und in der eingeschobenen Stellung des Kolbens 24 länger als in der ersten Drehstellung.

Somit kann durch ein Verdrehen des Kolben 24 die Länge der Seitenstrebe 3 in der eingeschobenen Stellung des Kolbens 24 variieren.

Die Kolbenfläche 34 des Kolbens 24 und der Boden 35 des Zylindergehäuses 23 weisen jeweils einen kreisrunden Außenumfang auf. Die Ausnehmung 31 entspricht im gezeigten Ausführungsbeispiel im Querschnitt der Fläche eines Halbkreises des kreisförmigen Bodens 35. Der Vorsprung 30 ist komplementär zur Ausnehmung 31 ausgebildet und im Querschnitt etwas kleiner aus die Ausnehmung 31.

Der Hydraulikzylinder bildet zwischen dem Boden 35 des Zylindergehäuses 23 und der Kolbenfläche 34 des Kolbens 24 einen Zylinderraum, der über einen Hydraulikanschluss 40 mit Hydraulikflüssigkeit Druck beaufschlagt werden kann, um die Seitenstrebe 16 in die ausgeschobene Stellung des Kolbens 24 zu überführen. Bei Druckentlastung kann der Kolben 24 frei gegenüber dem Zylindergehäuse 23 verfahren und hat einen Schwimmweg, der entsprechend der Drehstellung des Kolbens 24 in seiner Länge einstellbar ist.

### Bezugszeichenliste

- 1: Traktor
- 2: Dreipunktanbauvorrichtung
- 3: Unterlenker
- 4: Unterlenker
- 5: Oberlenker
- 6: freies Ende
- 7: freies Ende
- 8: freies Ende
- 9: Kupplungshaken
- 10: Kupplungshaken
- 11: Kupplungshaken
- 12: Hubstange
- 13: Hubarm
- 14: Befestigungsstelle
- 15: Befestigungsstelle
- 16: Seitenstrebe
- 17: Seitenstrebe
- 18: erste Anschlussmittel
- 19: erste Anschlussmittel
- 20: zweite Anschlussmittel
- 21: zweite Anschlussmittel
- 22: Hydraulikzylinder
- 23: Zylindergehäuse
- 24: Kolben
- 25: Gelenksverbindung
- 26: Schubstange
- 27: Gabel
- 28: Hebel
- 29: Führungsgabel
- 30: Vorsprung
- 31: Ausnehmung
- 32: Stufe
- 33: Rücksprung
- 34: Kolbenfläche
- 35: Boden
- 36: Basisfläche
- 37: Anschlagfläche
- 38: Nut
- 39: Sperrgabel
- 40: Hydraulikanschluss

- A: Spreizmaß
- L1, L1': Länge
- L2, L2': Länge
- M: Traktorlängsachse
- S: Schwenkachse
- X: Seitenverschiebung
- Z: Längsachse

## Patentansprüche

1. Seitenstrebe (16, 17) zur Stabilisierung eines Unterlenkers (3, 4) einer Anbauvorrichtung (2) einer Landmaschine (1) umfassend
einen Hydraulikzylinder (22) mit einem Zylindergehäuse (23) und einem Kolben (24), der in dem Zylindergehäuse (23) entlang einer Längsachse (Z) der Seitenstrebe (16, 17) zwischen einer eingeschobenen Stellung und einer ausgeschobenen Stellung verschiebbar geführt ist,
**dadurch gekennzeichnet,**
**dass** der Kolben (24) relativ zum Zylindergehäuse (23) um die Längsachse (Z) zwischen einer ersten Drehstellung und einer zweiten Drehstellung drehbar ist und
**dass** eines von den Bauteilen Zylindergehäuse (23) und Kolben (24) einen Vorsprung (30) aufweist und das andere von den Bauteilen Zylindergehäuse (23) und Kolben (24) eine Ausnehmung (31) aufweist,
wobei in der ersten Drehstellung des Kolbens (24) der Vorsprung (30) und die Ausnehmung (31) in axialer Richtung gesehen in Überdeckung zueinander stehen und in der eingeschobenen Stellung des Kolbens (24) der Vorsprung (30) axial in der Ausnehmung (31) aufgenommen ist und
wobei in der zweiten Drehstellung des Kolbens (24) der Vorsprung (30) und die Ausnehmung (31) in axialer Richtung gesehen versetzt zueinander angeordnet sind und in der eingeschobenen Stellung des Kolbens (24) der Vorsprung (30) axial in Anlage zu einer Anschlagfläche (37) ist.

2. Seitenstrebe nach Anspruch 1,
**dadurch gekennzeichnet,**
**dass** der Kolben (24) eine Kolbenfläche (34) und das Zylindergehäuse (23) einen Boden (35) aufweist,
**dass** die Kolbenfläche (34) in der eingeschobenen Stellung des Kolbens (24) in Anlage zum Boden (35) des Zylindergehäuses (23) ist, und
**dass** die Kolbenfläche (34) und der Boden (35) in der ausgeschobenen Stellung des Kolbens (24) voneinander beabstandet sind.

3. Seitenstrebe nach Anspruch 2,
**dadurch gekennzeichnet,**
**dass** die Kolbenfläche (34) den Vorsprung (30) aufweist, der von einer Basisfläche (36) in Richtung Boden (35) des Zylindergehäuses (23) axial vorsteht, dass der Boden (35) die Ausnehmung (31) und die Anschlagfläche (37) aufweist,
**dass** der Vorsprung (30), in der eingeschobenen Stellung und in der ersten Drehstellung des Kolbens (24) in die Ausnehmung (31) des Bodens (35) eingreift und
**dass** der Vorsprung (30), in der eingeschobenen Stellung und in der zweiten Drehstellung des Kolbens (24) mit der Anschlagfläche (37) des Bodens (35) in Anlage ist.

4. Seitenstrebe nach Anspruch 3,
**dadurch gekennzeichnet,**
**dass** die Kolbenfläche (34) des Kolbens (24) einen kreisrunden Außenumfang aufweist und
**dass** der Vorsprung (30) innerhalb eines Kreissegments der Kolbenfläche (34) angeordnet ist.

5. Seitenstrebe nach einem der Ansprüche 3 oder 4,
**dadurch gekennzeichnet,**
**dass** der Boden (35) des Zylindergehäuses (23) einen kreisrunden Außenumfang aufweist und
**dass** der Querschnitt der Ausnehmung (31) komplementär zum Querschnitt des Vorsprungs (30) ausgebildet ist.

6. Seitenstrebe nach einem der Ansprüche 1 bis 5,
**dadurch gekennzeichnet,**
**dass** der Vorsprung in axialer Richtung gesehen stufenförmig gestaltet ist und eine vordere erste Stufenfläche und zumindest eine gegenüber der ersten Stufenfläche rückversetzte zweite Stufenfläche aufweist,
**dass** in der zweiten Drehstellung und in der eingeschobenen Stellung des Kolbens die erste Stufenfläche in Anlage zur Anschlagfläche ist und
**dass** in einer Zwischendrehstellung des Kolbens zwischen der ersten Drehstellung und der zweiten Drehstellung und in der eingeschobenen Stellung des Kolbens die zweite Stufenfläche in Anlage zur Anschlagfläche ist.

7. Seitenstrebe nach einem der Ansprüche 1 bis 6,
**dadurch gekennzeichnet,**
**dass** die Anschlagfläche in axialer Richtung gesehen stufenförmig gestaltet ist und einen vorderen ersten Anschlagflächenabschnitt und zumindest einen gegenüber dem ersten Anschlagflächenabschnitt rückversetzten zweiten Anschlagflächenabschnitt aufweist,
**dass** in der zweiten Drehstellung und in der eingeschobenen Stellung des Kolbens der Vorsprung in Anlage zum ersten Anschlagflächenabschnitt ist und
**dass** in einer weiteren Drehstellung des Kolbens zwischen der ersten Drehstellung und der zweiten Drehstellung und in der eingeschobenen Stellung des Kolbens der Vorsprung in Anlage zum zweiten Anschlagflächenabschnitt ist.

8. Seitenstrebe nach einem der Ansprüche 1 bis 7,
**dadurch gekennzeichnet,**
**dass** die Seitenstrebe (16, 17) ferner einen Drehsicherungsmechanismus (28, 29, 38) aufweist, der in einer Sperrstellung den Kolben (24) drehfest zum Zylindergehäuse (23) hält und in einer Freigabestellung den Kolben (24) relativ zum Zylindergehäuse (23) drehbar freigibt.

9. Seitenstrebe nach Anspruch 8,
**dadurch gekennzeichnet,**
**dass** der Drehsicherungsmechanismus einen Hebel (28) aufweist, der parallel zur Längsachse (Z) ausgerichtet ist und an einem von den Bauteilen Zylindergehäuse (23) und Kolben (24) um eine Schwenkachse quer zur Längsachse (Z) zwischen einer Sperrstellung und einer Freigabestellung schwenkbar befestigt ist,
**dass** der Hebel (28) in eine Nut (38) eingreift, die an einem von den Bauteilen Zylindergehäuse (23) und Kolben (24) angeordnet ist, und
**dass** der Hebel (28) in der Sperrstellung in die Nut (38) eingreift und in der Freigabestellung aus der Nut (38) herausgeschwenkt ist.
